# EUROPEAN PATENT SPECIFICATION

(11) **EP 3 113 469 B1**
(45) Date of publication and mention of the grant of the patent: **26.12.2018**
(21) Application number: 16164377.0
(22) Date of filing: 08.04.2016
(51) Int. Cl.: H04M 15/00, H04M 15/06, H04M 17/00

(54) **METHOD AND APPARATUS FOR INCREASING SECURITY IN RECHARGING**
VERFAHREN UND VORRICHTUNG ZUR ERHÖHUNG DER SICHERHEIT BEIM AUFLADEN
PROCÉDÉ ET APPAREIL POUR ACCROÎTRE LA SÉCURITÉ LORS D'UNE RECHARGE

(30) Priority: 30.06.2015 CN 201510386177
(43) Date of publication of application: 04.01.2017
(73) Proprietor: Xiaomi Inc., Beijing 100085 (CN)
(72) Inventor: WANG, Bin, Beijing 100085 (CN); WANG, Guangjian, Beijing 100085 (CN); WANG, Shuo, Beijing 100085 (CN)
(74) Representative: Sadler, Peter Frederick

(56) References cited:
- CN-U- 204 347 983
- US-A1- 2004 230 527
- US-A1- 2011 002 453
- US-A1- 2011 137 789
- US-A1- 2014 373 139
- US-A1- 2015 044 990

## Description

### FIELD

The disclosure relates to the field of communication, and particularly, to a method and an apparatus for increasing security in recharging.

### BACKGROUND

Presently, payment methods for mobile terminals are not limited to paying over the counter at a business hall of an operator. More and more users choose to recharge or add credit associated with a phone number by using an account to pay on mobile terminals so as to save the trouble of going to the shop of the operator, which is extremely quick and easy. When paying via a mobile terminal, a user can recharge his/her own mobile terminal as well as other mobile terminals. For example, a user may access a recharge interface on the mobile terminal, and choose to recharge his/her own phone number or select from the contact list a contact number to recharge, which is very flexible.

US patent application US 2015/044990 describes a top-up system that includes an interface module that receives and transmits a phone number associated with a phone user's account; and a top-up gateway that receives and transmits the phone number from the interface module and requests for a telephone service company associated with the phone number to a home location register (HLR) look up service. The top-up gateway tops up phone minutes and/or balance of money of the phone user's account associated with the phone number based on the phone number, and requested telephone service company.

US patent application US 2004/230527 describes a method for processing a transaction where the transaction is initiated by a payor online, but paid to a payee in-person. Payor information is accepted at a location across a wide area network from the payor. Transaction information and payment source information is also accepted at the location. The transaction information includes an amount and a payee identifier and the payment source information includes account details associated with an account of the payor at a money handler. A risk related to a likelihood that the transaction will complete successfully is evaluated. Validating that the payment source information is associated with the payor is manually performed if the risk is excessive.

US patent application US 2014/373139 describes a method of distinguishing between a human and a machine. The method includes: when a request for accessing a designated network service is received, recording information of the request which include a time of receiving the request and information of an access object that sends the request; computing a statistical value of requests sent by the access object in real time based on a record; and determining the access object to be abnormal when the statistical value of the requests sent by the access object falls outside a predetermined normal range.

US patent application US 2011/002453 describes a method and a system that allows a person to contact one or more companies with which the person has a relationship, such that the person can contact each company using a single telephone number. A call from a person (member) is received requesting to contact a first company; a member profile stored on a database is accessed, the member profile comprising information regarding the identity of the person and identities of one or more companies selected by the person; the identity of the person is verified; the request to contact the first company is verified by determining if the first company is one company stored in the member profile; and then the verified request is transferred to the first company by way of a dedicated number, so as to rapidly access an agent.

Chinese patent application CN 204347983 describes a mobile business hall self-help recharge payment system, which selects a recharge mode of others paying through a recharge terminal, sends recharge instructions and others account information to a server, the server sends out others paying instructions which comprise user card information and operator accounts to others accounts, and a mobile terminal receives others paying instructions, checks the user card information, pays in a mobile mode, and sends a paying result to the server. The mobile business hall self-help recharge payment system has the function of others paying, enables users not to carry cash, bank cards and credit cards to do recharge payment operations for mobile phone cards.

US patent application US 2011/137789 describes a configuration for more efficient electronic financial transactions. Users input personal and financial information into a system that validates the information to generate trusted financial profiles. Each user can establish trusted financial links with other users. The trusted financial link provides a mechanism for the user to allow other users to withdraw money from the link provider account. The data from these relationships and the financial data flowing through the system enable a measure of trustworthiness of users and the trustworthiness of all interactions in the system. The combination of trusted financial profiles, trusted financial links, and financial transactions between users create a measurable financial trust graph which is a true representation of the trusting economic relationships among the users. The financial trust graph enables a more accurate assessment of the creditworthiness and financial risk of transactions by users with little or no credit or transaction history.

### SUMMARY

In view of the above, the present disclosure provides a method and an apparatus for increasing security in recharging, or adding credit to, a phone number so as to avoid mistaken recharging and improve security in recharging.

According to a first aspect of an embodiment of the present disclosure, a method for increasing security in recharging, or adding credit to, a phone number is provided, the method being applied in a server and comprising the steps of: receiving a request sent by a first terminal to recharge a first number; obtaining information on the first number and determining whether the first number is a trusted number based on the obtained information; recharging the first number if it is determined that the first number is a trusted number, and alerting the first terminal that the first number is not a trusted number if it is determined that the first number is not a trusted number, wherein the first number is not a number corresponding to, or associated with, the first terminal.

"Recharging" refers to adding money to a phone, or an account associated with it, so that a user can make calls, send texts, use network data etc. This is sometimes referred to as adding credit to a phone, or "topping up" a phone. It applies, in particular, to "pay-as-you-go" phones where the user adds call credit whenever they have run out.

Obtaining information on the first number and determining whether the first number is a trusted number based on the obtained information comprises: obtaining a recharge history record of the first number wherein, the recharge history record is recorded and stored by the server each time the first number is recharged so that multiple recharge records are obtained; determining whether the first number has been recharged by a plurality of different users and the number of recharge times exceeds a specified number of times within a specified time range based on the recharge history record of the first number, determining that the first number is not a trusted number if yes, and determining that the first number is a trusted number if no.

Alternatively, obtaining information on the first number and determining whether the first number is a trusted number based on the obtained information comprises: obtaining contact information of the first number and contact information of the first terminal, wherein the server collects and stores, in advance, contact information reported by a plurality of terminals, so as to obtain required contact information upon receiving the recharge request; determining whether there is association between the first number and a number corresponding to the first terminal based on the contact information of the first number and the contact information of the first terminal, determining that the first number is a trusted number if yes, and determining that the first number is not a trusted number if no.

Determining whether there is association between the first number and a number corresponding to the first terminal based on the contact information of the first number and the contact information of the first terminal, determining that the first number is a trusted number if yes, and determining that the first number is not a trusted number if no comprises: determining whether contacts of a second number corresponding to the first terminal include the first number or determining whether contacts of any contact of the second number include the first number based on the contact information of the first number and the contact information of the first terminal, determining that the first number is a trusted number if yes, and determining that the first number is not a trusted number if no.

Optionally, after alerting the first terminal that the first number is not a trusted number, the method may further comprise: asking a user of the first terminal whether to continue recharging the first number, and recharging the first number when getting confirmation from the user.

According to a second aspect of an embodiment of the present disclosure, an apparatus for increasing security in recharging is provided, which comprises: a receiving module for receiving a request sent by a first terminal to recharge a first number; an obtaining module for obtaining information on the first number and determining whether the first number is a trusted number based on the obtained information; a control module for recharging the first number if it is determined that the first number is a trusted number and alerting the first terminal that the first number is not a trusted number if it is determined that the first number is not a trusted number, wherein the first number is not a number corresponding to the first terminal.

The obtaining module comprises: a first obtaining sub-module for obtaining a recharge history record of the first number wherein, the recharge history record is recorded and stored by the apparatus each time the first number is recharged so that multiple recharge records are obtained; a first determining sub-module for determining whether the first number has been recharged by a plurality of different users and the number of recharge times exceeds a specified number of times within a specified time range based on the recharge history record of the first number, determining that the first number is not a trusted number if yes, and determining that the first number is a trusted number if no.

Alternatively, the obtaining module comprises: a second obtaining sub-module for obtaining contact information of the first number and contact information of the first terminal, wherein the apparatus collects and stores, in advance, contact information reported by a plurality of terminals, so as to obtain required contact information upon receiving the recharge request; a second determining sub-module for determining whether there is association between the first number and a number corresponding to the first terminal based on the contact information of the first number and the contact information of the first terminal, determining that the first number is a trusted number if yes, and determining that the first number is not a trusted number if no.

The second determining sub-module is configured to: determine whether contacts of a second number corresponding to the first terminal include the first number or determining whether contacts of any contact of the second number include the first number based on the contact information of the first number and the contact information of the first terminal, determining that the first number is a trusted number if yes, and determining that the first number is not a trusted number if no.

Optionally, the control module may be further configured for: after alerting the first terminal that the first number is not a trusted number, asking a user of the first terminal whether to continue recharging the first number, and recharging the first number when getting confirmation from the user.

The technical solution provided by embodiments of the present disclosure may include the following advantageous effects: by receiving a request sent by a first terminal to recharge a first number, obtaining information on the first number, determining whether the first number is a trusted number based on the obtained information, recharging the first number if it is determined that the first number is a trusted number, and alerting the first terminal that the first number is not a trusted number if it is determined that the first number is not a trusted number, the following effect is realized: when recharging a number not corresponding to the first terminal, it is first determined whether recharging the number is secure; the number is recharged only if confirmed as a trusted number; and the first terminal is alerted when the number is confirmed as an untrusted number, which significantly increases security in recharging, avoids occurrence of mistaken recharge, and prevents damage to user's property.

It should be understood that, the general description above and detailed description below are only exemplary and explanatory, and do not limit the present disclosure.

### BRIEF DESCRIPTION OF THE DRAWINGS

The accompany drawings herein, which illustrate embodiments in compliance with the present invention, are incorporated in and constitute a part of this specification, and together with the description, serve to explain the principle of the invention.
Fig. 1 is a flow chart of a method for increasing security in recharging according to an exemplary embodiment.
Fig. 2 is a flow chart of a method for increasing security in recharging according to another exemplary embodiment.
Fig. 3 is a flow chart of a method for increasing security in recharging according to another exemplary embodiment.
Fig. 4 is a block diagram of an apparatus for increasing security in recharging according to another exemplary embodiment.
Fig. 5 is a block diagram of an apparatus for increasing security in recharging according to another exemplary embodiment.
Fig. 6 is a block diagram of an apparatus for increasing security in recharging according to another exemplary embodiment.
Fig. 7 is a block diagram of an apparatus for increasing security in recharging according to another exemplary embodiment.
. 8 is a block diagram of an apparatus for increasing security in recharging according to another exemplary embodiment.
Fig. 9 is a block diagram of an apparatus for increasing security in recharging according to another exemplary embodiment.

### DETAILED DESCRIPTION

Exemplary embodiments will be detailed now, examples of which are illustrated in the drawings. When the following description refers to the drawings, unless indicated otherwise, the same numeral in different figures represents the same or similar element. The implementations described in the following exemplary embodiments do not necessarily represent all the implementations consistent with the present invention. Instead, they are merely examples of the method and the apparatus in accordance with some aspects of the present invention as detailed in appended claims.

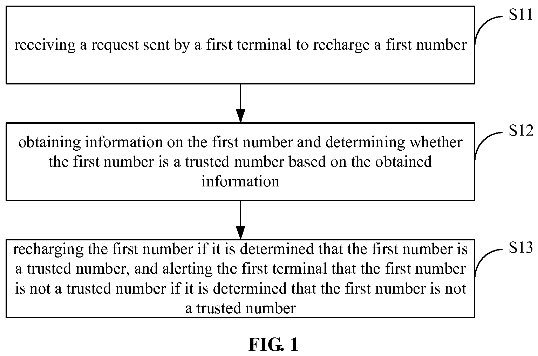

Fig. 1 is a flow chart of a method for increasing security in recharging according to an exemplary embodiment. As shown in Figure 1, the method may be applied in a server and may comprise the following steps.

In step S11, receiving a request sent by a first terminal to recharge a first number; wherein, the first number is not a number corresponding to the first terminal.

In the present embodiment, the first terminal may be a terminal of any type, including but not limited to: a computer, a phone, a tablet computer, a laptop, etc.

The scenario for recharging in the present embodiment is an application scenario in which the first terminal recharges any number other than its own number.

In step S12, obtaining information on the first number and determining whether the first number is a trusted number based on the obtained information; wherein information on the first number may be contact information or a recharge history record, etc., which is not limited by the present embodiment.

In step S13, recharging the first number if it is determined that the first number is a trusted number, and alerting the first terminal that the first number is not a trusted number if it is determined that the first number is not a trusted number.

In the present embodiment, optionally, obtaining information on the first number and determining whether the first number is a trusted number based on the obtained information comprises: obtaining a recharge history record of the first number; determining whether the first number has been recharged by a plurality of different users and the number of recharge times exceeds a specified number of times within a specified time range based on the recharge history record of the first number, determining that the first number is not a trusted number if yes, and determining that the first number is a trusted number if no.

In the present embodiment, optionally, obtaining information on the first number and determining whether the first number is a trusted number based on the obtained information comprises: obtaining contact information of the first number and contact information of the first terminal; determining whether there is association between the first number and a number corresponding to the first terminal based on the contact information of the first number and the contact information of the first terminal, determining that the first number is a trusted number if yes, and determining that the first number is not a trusted number if no.

In the present embodiment, optionally, determining whether there is association between the first number and a number corresponding to the first terminal based on the contact information of the first number and the contact information of the first terminal, determining that the first number is a trusted number if yes, and determining that the first number is not a trusted number if no comprises: determining whether contacts of a second number corresponding to the first terminal include the first number or determining whether contacts of any contact of the second number include the first number based on the contact information of the first number and the contact information of the first terminal, determining that the first number is a trusted number if yes, and determining that the first number is not a trusted number if no.

In the present embodiment, optionally, after alerting the first terminal that the first number is not a trusted number, the method further comprises: asking a user of the first terminal whether to continue recharging the first number, and recharging the first number when getting confirmation from the user.

By receiving a request sent by a first terminal to recharge a first number, obtaining information on the first number, determining whether the first number is a trusted number based on the obtained information, recharging the first number if it is determined that the first number is a trusted number, and alerting the first terminal that the first number is not a trusted number if it is determined that the first number is not a trusted number, the above method provided by the present embodiment achieves the following effect: when recharging a number not corresponding to the first terminal, it is first determined whether recharging the number is secure; the number is recharged only if confirmed as a trusted number; and the first terminal is alerted when the number is confirmed as an untrusted number, which significantly increases security in recharging, avoids occurrence of mistaken recharge, and prevents damage to user's property.

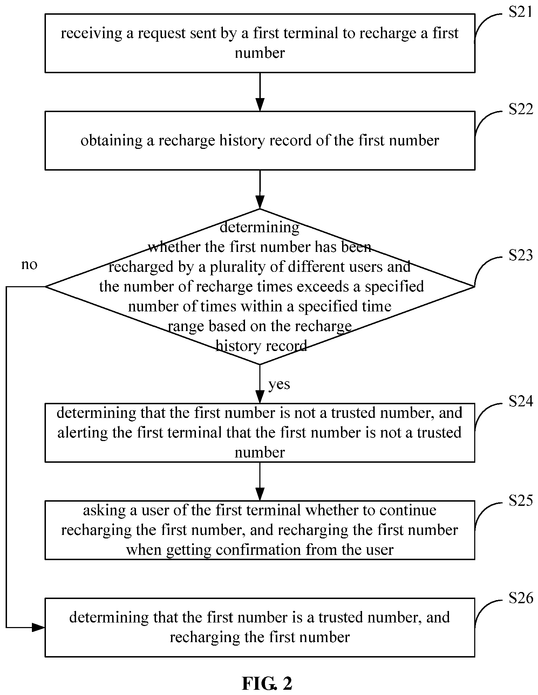

Fig. 2 is a flow chart of a method for increasing security in recharging according to another exemplary embodiment. As shown in Figure 2, the method may be applied in a server and may comprise the following steps.

In step S21, receiving a request sent by a first terminal to recharge a first number; wherein, the first number is not a number corresponding to the first terminal.

In step S22, obtaining a recharge history record of the first number; wherein, the recharge history record is recorded and stored by the server each time the first number is recharged so that multiple recharge records are obtained, each recharge record may comprise various kinds of information, including but not limited to: recharge time, recharge amount, payment account, etc.

In step S23, determining whether the first number has been recharged by a plurality of different users and the number of recharge times exceeds a specified number of times within a specified time range based on the recharge history record of the first number, performing step S24 if yes, and performing step S26 if no; wherein, the specified time range may be set as desired, the specific value of which is not limited by the present embodiment. For example, ten hours, one day, five days or the like may be set. The specified number of times may also be set as desired, the specific value of which is not limited by the present embodiment. For example, five times, ten times, twenty times or the like may be set.

Wherein, a plurality of different users recharging the first number may be the case in which the plurality of users are cheated by the same illegal user and all of them recharge the number of the illegal user. In such case, the first number should be confirmed as an untrusted number.

In step S24, determining that the first number is not a trusted number, and alerting the first terminal that the first number is not a trusted number; wherein, the content of which the first terminal is alerted may be set, for example, as "the number has recently been recharged by a plurality of persons, continue or not (beware of deception)?" etc., which is not limited by the present embodiment.

In step S25, asking a user of the first terminal whether to continue recharging the first number, and recharging the first number when getting confirmation from the user, ending the flow.

In step S26, determining that the first number is a trusted number, and recharging the first number, ending the flow.

By receiving a request sent by a first terminal to recharge a first number, obtaining a recharge history record of the first number, determining whether the first number is a trusted number based on the recharge history record, recharging the first number if it is determined that the first number is a trusted number, alerting the first terminal that the first number is not a trusted number if it is determined that the first number is not a trusted number, asking a user of the first terminal whether to continue recharging the first number, and recharging the first number when getting confirmation from the user, the above method provided by the present embodiment achieves the following effect: when recharging a number not corresponding to the first terminal, it is first determined whether recharging the number is secure; the number is recharged only if confirmed as a trusted number; and the first terminal is alerted when the number is confirmed as an untrusted number, which significantly increases security in recharging, avoids occurrence of mistaken recharge, and prevents damage to user's property.

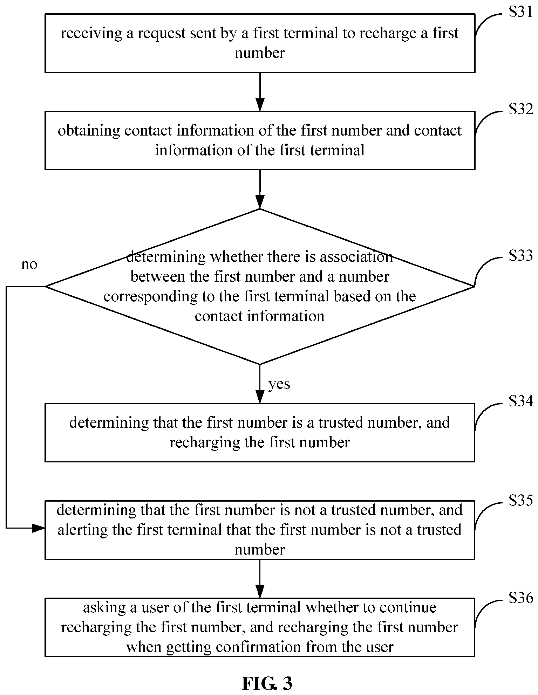

Fig. 3 is a flow chart of a method for increasing security in recharging according to another exemplary embodiment. As shown in Figure 3, the method may be applied in a server and may comprise the following steps.

In step S31, receiving a request sent by a first terminal to recharge a first number; wherein, the first number is not a number corresponding to the first terminal.

In step S32, obtaining contact information of the first number and contact information of the first terminal; wherein, the server may collect and store in advance contact information reported by a plurality of terminals, so as to obtain required contact information upon receiving a recharge request. Accordingly, a terminal will report contact information when recharging, and optionally, may also report call records or short message records, etc., so that the server may store them to facilitate subsequent analysis and statistics.

In step S33, determining whether there is association between the first number and a number corresponding to the first terminal based on the contact information of the first number and the contact information of the first terminal, performing step S34 if yes, and performing step S35 if no; the present step may include the following steps: determining whether contacts of a second number corresponding to the first terminal include the first number or determining whether contacts of any contact of the second number include the first number based on the contact information of the first number and the contact information of the first terminal, determining that the first number is a trusted number if yes, and determining that the first number is not a trusted number if no.

Wherein, contacts of a second number corresponding to the first terminal include the first number means that the first number is a contact of the second number, in which case, the first terminal may confirm the first number as a friend of its own number (i.e., the second number), and therefore, the first number is a trusted number. Contacts of any contact of the second number include the first number means that the first number is a friend of the second number's friend, in which case, the first terminal may also confirm the first number as a trusted number.

In step S34, determining that the first number is a trusted number, and recharging the first number, ending the flow.

In step S35, determining that the first number is not a trusted number, and alerting the first terminal that the first number is not a trusted number; wherein, the content of which the first terminal is alerted may be set, for example, as "the number is neither a friend nor a friend of your friend, continue or not?" etc., which is not limited by the present embodiment.

In step S36, asking a user of the first terminal whether to continue recharging the first number, and recharging the first number when getting confirmation from the user, ending the flow.

By receiving a request sent by a first terminal to recharge a first number, obtaining contact information of the first number and contact information of the first terminal, determining whether the first number is a trusted number based on the obtained information, recharging the first number if it is determined that the first number is a trusted number, alerting the first terminal that the first number is not a trusted number if it is determined that the first number is not a trusted number, asking a user of the first terminal whether to continue recharging the first number, and recharging the first number when getting confirmation from the user, the above method provided by the present embodiment achieves the following effect: when recharging a number not corresponding to the first terminal, it is first determined whether recharging the number is secure; the number is recharged only if confirmed as a trusted number; and the first terminal is alerted when the number is confirmed as an untrusted number, which significantly increases security in recharging, avoids occurrence of mistaken recharge, and prevents damage to user's property.

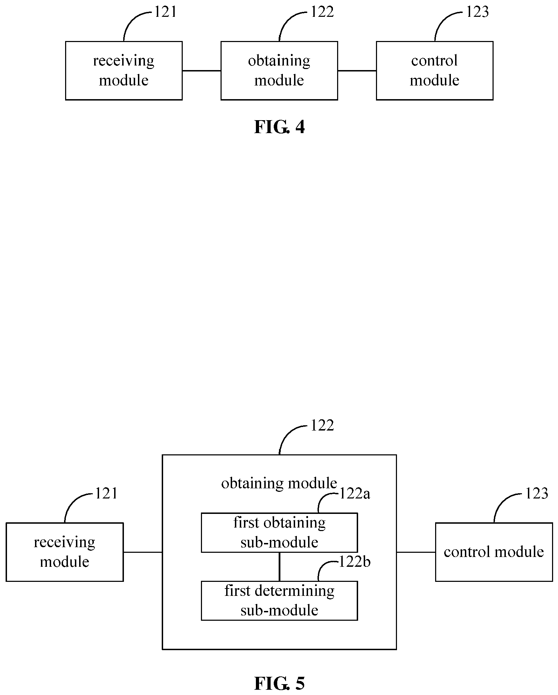

Fig. 4 is a block diagram of an apparatus for increasing security in recharging according to another exemplary embodiment. Referring to Figure 4, the apparatus includes a receiving module 121, an obtaining module 122 and a control module 123.

The receiving module 121 may be configured for receiving a request sent by a first terminal to recharge a first number; the obtaining module 122 may be configured for obtaining information on the first number and determining whether the first number is a trusted number based on the obtained information; the control module 123 may be configured for recharging the first number if it is determined that the first number is a trusted number and alerting the first terminal that the first number is not a trusted number if it is determined that the first number is not a trusted number; wherein the first number is not a number corresponding to the first terminal.

Referring to Fig. 5, in the present embodiment, optionally, the obtaining module 122 includes: a first obtaining sub-module 122a configured for obtaining a recharge history record of the first number; a first determining sub-module 122b configured for determining whether the first number has been recharged by a plurality of different users and the number of recharge times exceeds a specified number of times within a specified time range based on the recharge history record of the first number, determining that the first number is not a trusted number if yes, and determining that the first number is a trusted number if no.

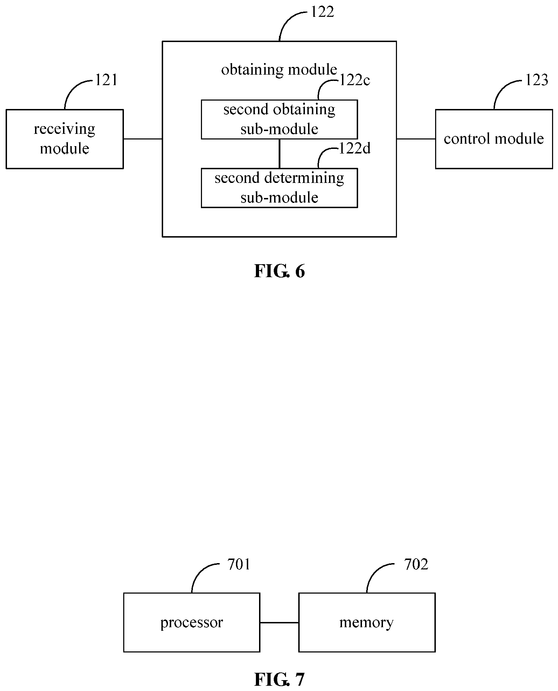

Referring to Fig. 6, in the present embodiment, optionally, the obtaining module 122 includes: a second obtaining sub-module 122c configured for obtaining contact information of the first number and contact information of the first terminal; a second determining sub-module 122d configured for determining whether there is association between the first number and a number corresponding to the first terminal based on the contact information of the first number and the contact information of the first terminal, determining that the first number is a trusted number if yes, and determining that the first number is not a trusted number if no.

In the present embodiment, optionally, the second determining sub-module 122d is configured for: determining whether contacts of a second number corresponding to the first terminal include the first number or determining whether contacts of any contact of the second number include the first number based on the contact information of the first number and the contact information of the first terminal, determining that the first number is a trusted number if yes, and determining that the first number is not a trusted number if no.

In the present embodiment, optionally, the control module 123 is further configured for: after alerting the first terminal that the first number is not a trusted number, asking a user of the first terminal whether to continue recharging the first number, and recharging the first number when getting confirmation from the user.

As to the apparatus of the above embodiment, the way in which each module therein performs operation has been detailed in the embodiment related to the method, which will not be explained in detail herein.

By receiving a request sent by a first terminal to recharge a first number, obtaining information on the first number, determining whether the first number is a trusted number based on the obtained information, recharging the first number if it is determined that the first number is a trusted number, and alerting the first terminal that the first number is not a trusted number if it is determined that the first number is not a trusted number, the above apparatus provided by the present embodiment achieves the following effect: when recharging a number not corresponding to the first terminal, it is first determined whether recharging the number is secure; the number is recharged only if confirmed as a trusted number; and the first terminal is alerted when the number is confirmed as an untrusted number, which significantly increases security in recharging, avoids occurrence of mistaken recharge, and prevents damage to user's property.

Fig. 7 is a block diagram of an apparatus for increasing security in recharging according to another exemplary embodiment. Referring to Figure 7, the apparatus may include: a processor 701 and a memory 702 for storing instructions executable by the processor; wherein the processor 701 may be configured for: receiving a request sent by a first terminal to recharge a first number; obtaining information on the first number and determining whether the first number is a trusted number based on the obtained information; recharging the first number if it is determined that the first number is a trusted number, and alerting the first terminal that the first number is not a trusted number if it is determined that the first number is not a trusted number; wherein the first number is not a number corresponding to the first terminal.

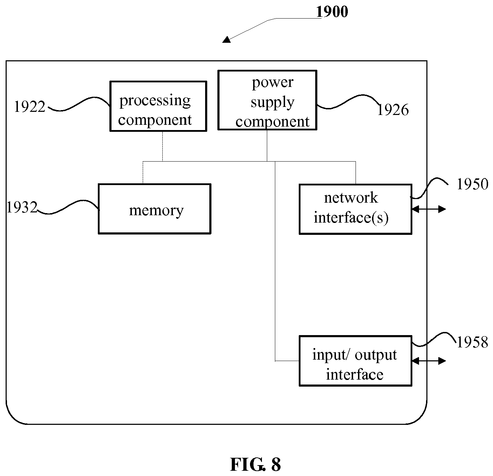

Fig. 8 is a block diagram of an apparatus 1900 for increasing security in recharging according to another exemplary embodiment. For example, the apparatus 1900 may be provided as a server. Referring to Figure 8, the apparatus 1900 may include a processing component 1922 which may further include one or more processors, and memory resource represented by a memory 1932 for storing instructions, such as application programs, which can be executed by the processing component 1922. Application programs stored in the memory 1932 may include one or more modules, each module corresponding to a set of instructions. Additionally, the processing component 1922 may be configured for executing instructions, so as to perform the method provided by any of the above embodiments.

The apparatus 1900 may further include a power supply module 1926 configured to perform power management for the apparatus 1900, a wired or wireless network interface 1950 configured to connect the apparatus 1900 to a network, and an input/output (I/O) interface 1958. The apparatus 1900 may work based on an operating system stored in the memory 1932, such as Windows Server™, Mac OS X™, Unix™, Linux™, FreeBSD™ or the like.

By receiving a request sent by a first terminal to recharge a first number, obtaining information on the first number, determining whether the first number is a trusted number based on the obtained information, recharging the first number if it is determined that the first number is a trusted number, and alerting the first terminal that the first number is not a trusted number if it is determined that the first number is not a trusted number, the above apparatus provided by the present embodiment achieves the following effect: when recharging a number not corresponding to the first terminal, it is first determined whether recharging the number is secure; the number is recharged only if confirmed as a trusted number; and the first terminal is alerted when the number is confirmed as an untrusted number, which significantly increases security in recharging, avoids occurrence of mistaken recharge, and prevents damage to user's property.

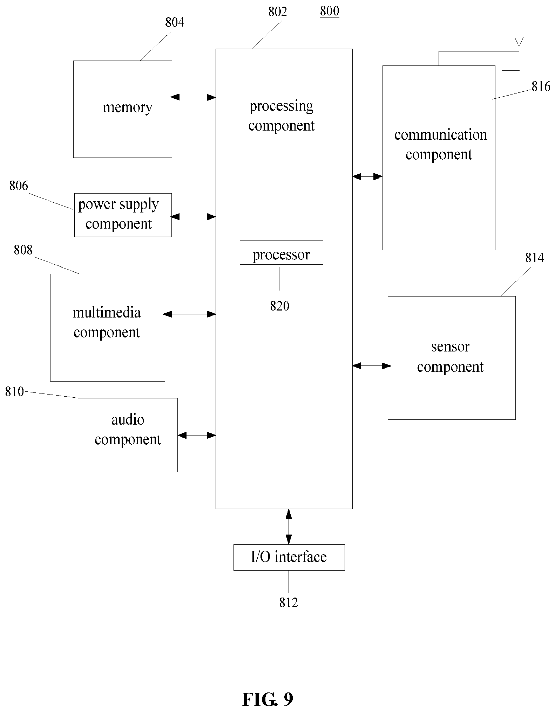

Fig. 9 is a block diagram of an apparatus 800 for increasing security in recharging according to another exemplary embodiment. For example, the apparatus 800 may be a mobile phone, a computer, a digital broadcast terminal, a message transceiving device, a game console, a tablet device, a medical device, an exercise equipment, a personal digital assistant, etc.

Referring to Figure 9, the apparatus 800 may include one or more of the following components: a processing component 802, a memory 804, a power supply component 806, a multimedia component 808, an audio component 810, an input/output (I/O) interface 812, a sensor component 814 and a communication component 816.

The processing component 802 usually controls the overall operations of the apparatus 800, such as operations associated with display, phone call, data communication, camera operation and recording operation. The processing component 802 may include one or more processors 820 to execute instructions, so as to accomplish some or all the steps of the method provided by any embodiment described above. Additionally, the processing component 802 may include one or more modules to facilitate interaction between the processing component 802 and another component. For example, the processing component 802 may include a multimedia module to facilitate interaction between the multimedia component 808 and the processing component 802.

The memory 804 may be configured to store various types of data to support operations on the apparatus 800. Examples of these data may include instructions of any application program or method operated on the apparatus 800, contact data, phone book data, message, picture, video, etc. The memory 804 may be implemented by any type of volatile or non-volatile storage device or the combination thereof, such as static random access memory (SRAM), electrically erasable programmable read only memory (EEPROM), erasable programmable read-only memory (EPROM), programmable read-only memory (PROM), read-only memory (ROM), magnetic memory, flash memory, magnetic disk or optical disk.

The power supply component 806 may supply power for various components of the apparatus 800. The power supply component 806 may include a power supply management system, one or more power supplies and other components associated with power generation, management and distribution for the apparatus 800.

The multimedia component 808 may include a screen that provides an output interface between the apparatus 800 and a user. In some embodiments, the screen may include a liquid crystal display (LCD) and a touch panel (TP). If the screen includes a touch panel, the screen may be implemented as a touch screen so as to receive an input signal from the user. A touch panel may include one or more touch sensors to sense a touch, a slide and a gesture on the touch panel. The touch sensor can not only sense the boundary of a touch or slide operation, but also detect the pressure and duration related to the touch or slide operation. In some embodiments, the multimedia component 808 may include a front-facing camera and/or rear-facing camera. When the apparatus 800 is in operation mode, such as shooting mode or video mode, the front-facing camera and/or rear-facing camera may receive external multimedia data. Each of the front-facing camera and rear-facing camera may be a fixed optical lens system or have the capability of focus and optical zoom.

The audio component 810 may be configured to output and/or input an audio signal. For example, the audio component 810 may include a microphone (MIC), which may be configured to receive an external audio signal when the apparatus 800 is in operation mode, such as a call mode, a record mode and a voice recognition mode. The received audio signal may further be stored in the memory 804 or transmitted via the communication component 816. In some embodiments, the audio component 810 may further include a speaker for outputting an audio signal.

The I/O interface 812 provides an interface between the processing component 802 and a peripheral interface module, wherein the peripheral interface module may be a keyboard, a click wheel, a button, etc. The button may include but is not limited to: a homepage button, a volume button, a start button and a lock button.

The sensor component 814 may include one or more sensors for providing state assessment for various aspects of the apparatus 800. For example, the sensor component 814 may detect an open/close state of the apparatus 800, relative positioning of components, such as a display and a keypad of the apparatus 800. The sensor component 814 may further detect a position change of the apparatus 800 or a component thereof, existence or absence of a user's contact with the apparatus 800, orientation or acceleration/deceleration of the apparatus 800, and a temperature change of the apparatus 800. The sensor component 814 may include a proximity sensor configured to detect existence of a nearby object without any physical contact. The sensor component 814 may further include an optical sensor, such as a CMOS or CCD image sensor, for use in an imaging application. In some embodiments, the sensor component 814 may further include an acceleration sensor, a gyroscope sensor, a magnetic sensor, a pressure sensor or a temperature sensor.

The communication component 816 may be configured to facilitate wired or wireless communication between the apparatus 800 and another device. The apparatus 800 may access a wireless network based on a communication standard, such as WiFi, 2G, 3G or the combination thereof. In one exemplary embodiment, the communication component 816 may receive a broadcast signal or broadcast related information from an external broadcast management system via a broadcast channel. In one exemplary embodiment, the communication component 816 may further include a near field communication (NFC) module to facilitate short range communication. For example, the NFC module may be implemented based on radio frequency identification (RFID) technology, infrared data association (IrDA) technology, ultra wideband (UWB) technology, Bluetooth (BT) technology and other technology.

In an exemplary embodiment, the apparatus 800 may be implemented by one or more of an application specific integrated circuit (ASIC), a digital signal processor

(DSP), a digital signal processing device (DSPD), a programmable logical device (PLD), a field programmable gate array (FPGA), a controller, a microcontroller, a microprocessor or other electronic element, so as to perform steps such as reporting contact information to a server, receiving a recharge alert or confirmation returned by the server when recharging, etc.

In an exemplary embodiment, a non-transitory computer readable storage medium including instructions, such as a memory 804 including instructions, is further provided. The above instructions may be executed by the processor 820 of the apparatus 800 to accomplish steps such as reporting contact information to a server, receiving a recharge alert or confirmation returned by the server when recharging, etc. For example, the non-transitory computer readable storage medium may be a ROM, a random access memory (RAM), a CD-ROM, a tape, a floppy disk and an optical data storage device, etc.

A non-transitory computer readable storage medium, when instructions in the storage medium are executed by a processor of a mobile terminal, enables the mobile terminal to perform steps such as reporting contact information to a server, receiving a recharge alert or confirmation returned by the server when recharging, etc.

The non-transitory computer readable storage medium provided by the present embodiment can provide data for a server to make analysis and statistics and facilitate the server's analysis of the recharged number to determine whether it is a trusted number, thus can control a recharge behavior, increase security in recharging, avoid occurrence of mistaken recharge, and prevent damage to user's property.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Those skilled in the art, after contemplating the specification and practicing the invention disclosed herein, will easily conceive of other implementations of the invention. The present application is intended to encompass any variation, usage or adaptation which complies with the general principle of the present invention and includes common sense or customary technical means in the present technical field not disclosed in the present disclosure. The specification and embodiments are merely taken as exemplary, and the true scope of the invention are set forth in appended claims.

As will be appreciated, the present invention is not limited to the precise structure described above and shown in the figures, and various modifications and changes may be made thereto without departing from its scope. The scope of the present invention is only defined by appended claims.

## Claims

1. A method for improving security in recharging credit associated with a phone number, the method being applied in a server and comprising the steps of:
receiving (S11) a request sent by a first terminal to recharge credit associated with a first phone number;
obtaining (S12) information on the first phone number and determining whether the first phone number is a trusted phone number that is trusted by a user of the first terminal based on the obtained information: **characterized by**:
recharging (S13) the credit associated with the first phone number if it is determined that the first phone number is a trusted phone number, and alerting the first terminal that the first phone number is not a trusted phone number if it is determined that the first phone number is not a trusted phone number,
wherein the first phone number is not a phone number corresponding to the first terminal,
obtaining information on the first phone number and determining whether the first phone number is a trusted phone number based on the obtained information comprises:
obtaining a recharge history record of the first phone number wherein, the recharge history record is recorded and stored by the server each time the first number is recharged so that multiple recharge records are obtained;
determining whether the first phone number has been recharged by a plurality of different users and the number of recharge times exceeds a specified number of times within a specified time range based on the recharge history record of the first phone number, determining that the first phone number is not a trusted phone number if yes, and determining that the first phone number is a trusted phone number if no; or
obtaining information on the first phone number and determining whether the first phone number is a trusted phone number based on the obtained information comprises:
obtaining contact information of the first phone number and contact information of the first terminal, wherein the server collects and stores, in advance, contact information reported by a plurality of terminals, so as to obtain required contact information upon receiving the recharge request; and
determining whether there is association between the first phone number and a phone number corresponding to the first terminal based on the contact information of the first phone number and the contact information of the first terminal, determining that the first phone number is a trusted phone number if yes, and determining that the first phone number is not a trusted phone number if no by determining whether contacts of a second phone number corresponding to the first terminal include the first phone number or determining whether contacts of any contact of the second phone number include the first phone number based on the contact information of the first phone number and the contact information of the first terminal, determining that the first phone number is a trusted phone number if yes, and determining that the first phone number is not a trusted phone number if no.

2. The method according to any preceding claim, wherein after alerting the first terminal that the first phone number is not a trusted phone number, the method further comprises:
asking a user of the first terminal whether to continue recharging the credit associated with the first phone number, and recharging the credit associated with the first phone number when getting confirmation from the user.

3. An apparatus for improving security in recharging credit associated with a phone number, the apparatus comprising:
a receiving module (121) configured to receive a request sent by a first terminal to recharge the credit associated with a first phone number;
an obtaining module (122) configured to obtain information on the first phone number and determine whether the first phone number is a trusted phone number that is trusted by a user of the first terminal based on the obtained information;
a control module (123) configured to recharge the credit associated with the first phone number if it is determined that the first phone number is a trusted phone number and alert the first terminal that the first phone number is not a trusted phone number if it is determined that the first phone number is not a trusted phone number,
wherein the first phone number is not a phone number corresponding to the first terminal,
wherein the obtaining module (122) comprises:
a first obtaining sub-module (122a) configured to obtain a recharge history record of the first phone number wherein, the recharge history record is recorded and stored by the apparatus each time the first number is recharged so that multiple recharge records are obtained;
a first determining sub-module (122b) configured to determine whether the first phone number has been recharged by a plurality of different users and the number of recharge times exceeds a specified number of times within a specified time range based on the recharge history record of the first phone number, determine that the first phone number is not a trusted phone number if yes, and determine that the first phone number is a trusted phone number if no; or
wherein the obtaining module (122) comprises:
a second obtaining sub-module (122c) configured to obtain contact information of the first phone number and contact information of the first terminal, wherein the apparatus collects and stores, in advance, contact information reported by a plurality of terminals, so as to obtain required contact information upon receiving the recharge request;
a second determining sub-module (122d) configured to determine whether there is association between the first phone number and a phone number corresponding to the first terminal based on the contact information of the first phone number and the contact information of the first terminal, determine that the first phone number is a trusted phone number if yes, and determine that the first phone number is not a trusted phone number if no by determining whether contacts of a second phone number corresponding to the first terminal include the first phone number or determining whether contacts of any contact of the second phone number include the first phone number based on the contact information of the first phone number and the contact information of the first terminal, determining that the first phone number is a trusted phone number if yes, and determining that the first phone number is not a trusted phone number if no.

4. The apparatus according to claim 3, wherein the control module (123) is further configured to:
after alerting the first terminal that the first phone number is not a trusted phone number, ask a user of the first terminal whether to continue recharging the credit associated with the first phone number, and recharge the credit associated with the first phone number when getting confirmation from the user.

5. A computer program comprising instructions that, when executed on a computing device, cause it to carry out the method of any of claims 1 or 2.

## Patentansprüche

1. Verfahren zum Verbessern der Sicherheit beim Aufladen von Guthaben, die einer Telefonnummer zugeordnet sind, wobei das Verfahren in einem Server angewendet wird und die folgenden Schritte umfasst:
Empfangen (S11) einer von einem ersten Endgerät gesendeten Anforderung zum Aufladen von Guthaben, das einer ersten Telefonnummer zugeordnet ist;
Erhalten (S12) von Informationen über die erste Telefonnummer und Bestimmen, ob die erste Telefonnummer eine vertrauenswürdige Telefonnummer ist, der ein Benutzer des ersten Endgeräts vertraut, basierend auf den erhaltenen Informationen; **gekennzeichnet durch**:
Aufladen (S13) des Guthabens, das der ersten Telefonnummer zugeordnet ist, wenn bestimmt wird, dass die erste Telefonnummer eine vertrauenswürdige Telefonnummer ist, und Warnen des ersten Endgeräts, dass die erste Telefonnummer keine vertrauenswürdige Telefonnummer ist, wenn bestimmt wird, dass die erste Telefonnummer keine vertrauenswürdige Telefonnummer ist,
wobei die erste Telefonnummer keine Telefonnummer ist, die dem ersten Endgerät entspricht, und das Erhalten von Informationen über die erste Telefonnummer und das Bestimmen, ob die erste Telefonnummer basierend auf den erhaltenen Informationen eine vertrauenswürdige Telefonnummer ist, Folgendes umfasst:
Erhalten einer Aufladeverlaufsaufzeichnung der ersten Telefonnummer, wobei die Aufladeverlaufsaufzeichnung jedes Mal, wenn die erste Nummer aufgeladen wird, vom Server aufgezeichnet und gespeichert wird, so dass mehrere Aufladeverlaufsaufzeichnungen erhalten werden;
Bestimmen, ob die erste Telefonnummer von einer Vielzahl verschiedener Benutzer aufgeladen wurde und die Anzahl der Aufladevorgänge eine bestimmte Anzahl von Malen innerhalb eines bestimmten Zeitbereichs überschreitet, basierend auf der Aufladeverlaufsaufzeichnung der ersten Telefonnummer;
Bestimmen, dass die erste Telefonnummer keine vertrauenswürdige Telefonnummer ist, wenn ja, und Bestimmen, dass die erste Telefonnummer eine vertrauenswürdige Telefonnummer ist, wenn nein; oder
wobei das Erhalten von Informationen über die erste Telefonnummer und das Bestimmen, ob die erste Telefonnummer, basierend auf den erhaltenen Informationen, eine vertrauenswürdige Telefonnummer ist, Folgendes umfasst:
Erhalten von Kontaktinformationen der ersten Telefonnummer und Kontaktinformationen des ersten Endgeräts, wobei der Server im Voraus Kontaktinformationen sammelt und speichert, die von einer Vielzahl von Endgeräten gemeldet werden, um die erforderlichen Kontaktinformationen nach dem Empfangen der Aufladeanforderung zu erhalten; und
Bestimmen, ob eine Zuordnung zwischen der ersten Telefonnummer und einer dem ersten Endgerät entsprechenden Telefonnummer besteht, basierend auf den Kontaktinformationen der ersten Telefonnummer und den Kontaktinformationen des ersten Endgeräts;
Bestimmen, dass die erste Telefonnummer eine vertrauenswürdige Telefonnummer ist, wenn ja, und Bestimmen, dass die erste Telefonnummer keine vertrauenswürdige Telefonnummer ist, wenn nein, indem bestimmt wird, ob Kontakte einer zweiten Telefonnummer, die dem ersten Endgerät entspricht, die erste Telefonnummer beinhalten, oder indem bestimmt wird, ob Kontakte eines Kontakts der zweiten Telefonnummer die erste Telefonnummer beinhalten, basierend auf den Kontaktinformationen der ersten Telefonnummer und den Kontaktinformationen des ersten Endgeräts;
Bestimmen, dass die erste Telefonnummer eine vertrauenswürdige Telefonnummer ist, wenn ja, und Bestimmen, dass die erste Telefonnummer keine vertrauenswürdige Telefonnummer ist, wenn nein.

2. Verfahren nach einem vorhergehenden Anspruch, wobei nach der Warnung des ersten Endgeräts, dass die erste Telefonnummer keine vertrauenswürdige Telefonnummer ist, das Verfahren ferner umfasst:
Befragen eines Benutzers des ersten Endgeräts, ob das Aufladen des der ersten Telefonnummer zugeordneten Guthabens fortgesetzt werden soll, und Aufladen des der ersten Telefonnummer zugeordneten Guthabens, wenn eine Zustimmung vom Benutzer erfolgt.

3. Vorrichtung zum Verbessen der Sicherheit beim Aufladen eines Guthabens, das einer Telefonnummer zugeordnet ist, wobei die Vorrichtung umfasst:
ein Empfangsmodul (121), das dazu ausgelegt ist, eine von einem ersten Endgerät gesendete Anforderung zum Aufladen des Guthabens, das einer ersten Telefonnummer zugeordnet ist, zu empfangen;
ein Aufnahmemodul (122), das dazu ausgelegt ist, Informationen über die erste Telefonnummer zu erhalten und zu bestimmen, ob die erste Telefonnummer eine vertrauenswürdige Telefonnummer ist, der ein Benutzer des ersten Endgeräts auf Basis der erhaltenen Informationen vertraut;
ein Steuermodul (123), das dazu ausgelegt ist, das Guthaben, das der ersten Telefonnummer zugeordnet ist, aufzuladen, wenn bestimmt wird, dass die erste Telefonnummer eine vertrauenswürdige Telefonnummer ist, und das erste Endgerät zu warnen, dass die erste Telefonnummer keine vertrauenswürdige Telefonnummer ist, wenn bestimmt wird, dass die erste Telefonnummer keine vertrauenswürdige Telefonnummer ist,
wobei die erste Telefonnummer keine Telefonnummer ist, die dem ersten Endgerät entspricht,
wobei das Aufnahmemodul (122) umfasst:
ein erstes Aufnahme-Submodul (122a), das dazu ausgelegt ist, eine Aufladeverlaufsaufzeichnung der ersten Telefonnummer zu erhalten, wobei die Aufladeverlaufsaufzeichnung von der Vorrichtung jedes Mal aufgezeichnet und gespeichert wird, wenn die erste Nummer aufgeladen wird, so dass mehrere Aufladeaufzeichnungen erhalten werden;
ein erstes Bestimmungs-Submodul (122b), das dazu ausgelegt ist, zu bestimmen, ob die erste Telefonnummer von einer Vielzahl von verschiedenen Benutzern aufgeladen wurde und die Anzahl der Aufladevorgänge eine bestimmte Anzahl von Malen innerhalb eines bestimmten Zeitbereichs überschreitet, basierend auf der Aufladeverlaufsaufzeichnung der ersten Telefonnummer, und zu bestimmen, dass die erste Telefonnummer keine vertrauenswürdige Telefonnummer ist, wenn ja, und zu bestimmen, dass die erste Telefonnummer eine vertrauenswürdige Telefonnummer ist, wenn nein; oder
wobei das Aufnahmemodul (122) umfasst:
ein zweites Aufnahme-Submodul (122c), das dazu ausgelegt ist, Kontaktinformationen der ersten Telefonnummer und Kontaktinformationen des ersten Endgeräts zu erhalten, wobei die Vorrichtung im Voraus Kontaktinformationen sammelt und speichert, die von einer Vielzahl von Endgeräten gemeldet werden, um die erforderlichen Kontaktinformationen nach Empfangen der Aufladeanforderung zu erhalten;
ein zweites Bestimmungs-Submodul (122d), das dazu ausgelegt ist, zu bestimmen, ob es eine Zuordnung zwischen der ersten Telefonnummer und einer Telefonnummer gibt, die dem ersten Endgerät entspricht, basierend auf den Kontaktinformationen der ersten Telefonnummer und den Kontaktinformationen des ersten Endgeräts, und zu bestimmen, dass die erste Telefonnummer eine vertrauenswürdige Telefonnummer ist, wenn ja, und zu bestimmen, dass die erste Telefonnummer keine vertrauenswürdige Telefonnummer ist, wenn nein, indem bestimmt wird, ob Kontakte einer zweiten Telefonnummer, die dem ersten Endgerät entspricht, die erste Telefonnummer beinhalten, oder bestimmt wird, ob Kontakte eines Kontakts der zweiten Telefonnummer die erste Telefonnummer beinhalten, basierend auf den Kontaktinformationen der ersten Telefonnummer und den Kontaktinformationen des ersten Endgeräts, und zu bestimmen, dass die erste Telefonnummer eine vertrauenswürdige Telefonnummer ist, wenn ja, und zu bestimmen, dass die erste Telefonnummer keine vertrauenswürdige Telefonnummer ist, wenn nein.

4. Vorrichtung nach Anspruch 3, wobei das Steuermodul (123) ferner dazu ausgelegt ist:
nachdem das erste Endgerät gewarnt wurde, dass die erste Telefonnummer keine vertrauenswürdige Telefonnummer ist, Befragen eines Benutzers des ersten Endgeräts, ob das Aufladen des der ersten Telefonnummer zugeordneten Guthabens fortgesetzt werden soll, und Aufladen des der ersten Telefonnummer zugeordneten Guthabens, wenn eine Zustimmung vom Benutzer erfolgt.

5. Computerprogramm, das Befehle umfasst, die, wenn sie auf einer Computervorrichtung ausgeführt werden, bewirken, dass diese das Verfahren nach einem der Ansprüche 1 oder 2 durchführt.

## Revendications

1. Procédé d'amélioration de la sécurité lors de la recharge de crédit associé à un numéro de téléphone, le procédé étant appliqué dans un serveur et comprenant les étapes suivantes :
recevoir (S11) une demande envoyée par un premier terminal pour recharger le crédit associé à un premier numéro de téléphone ;
obtenir (S12) des informations sur le premier numéro de téléphone et déterminer si le premier numéro de téléphone est un numéro de téléphone de confiance auquel un utilisateur fait confiance du premier terminal en fonction des informations obtenues ; **caractérisé par** :
recharger (S13) le crédit associé au premier numéro de téléphone s'il est déterminé que le premier numéro de téléphone est un numéro de téléphone de confiance, et alerter le premier terminal comme quoi le premier numéro de téléphone n'est pas un numéro de téléphone de confiance s'il est déterminé que le premier numéro de téléphone n'est pas un numéro de téléphone de confiance,
le premier numéro de téléphone n'étant pas un numéro de téléphone correspondant au premier terminal,
le fait d'obtenir des informations sur le premier numéro de téléphone et déterminer si le premier numéro de téléphone est un numéro de téléphone de confiance en fonction des informations obtenues comprend les étapes consistant à :
obtenir un registre d'historique des recharges du premier numéro de téléphone, le registre d'historique des recharges étant enregistré et stocké par le serveur à chaque fois que le premier numéro est rechargé, de façon à obtenir de multiples registres de recharge ;
déterminer si le premier numéro de téléphone a été rechargé par une pluralité de différents utilisateurs et si le nombre de temps de recharge dépasse un nombre spécifié de fois à l'intérieur d'une gamme temporelle spécifiée en fonction du registre d'historique des recharges du premier numéro de téléphone,
déterminer que le premier numéro de téléphone n'est pas un numéro de téléphone de confiance si oui, et déterminer que le premier numéro de téléphone est un numéro de téléphone de confiance sinon ; ou
obtenir des informations sur le premier numéro de téléphone et déterminer si le premier numéro de téléphone est un numéro de téléphone de confiance en fonction des informations obtenues comprend :
obtenir des informations de contact du premier numéro de téléphone et des informations de contact du premier terminal, le serveur recueillant et stockant, à l'avance, des informations de contact rapportées par une pluralité de terminaux, de manière à obtenir les informations de contact requises lors de la réception de la demande de recharge ; et
déterminer s'il existe une association entre le premier numéro de téléphone et un numéro de téléphone correspondant au premier terminal en fonction des informations de contact du premier numéro de téléphone et des informations de contact du premier terminal, déterminer que le premier numéro de téléphone est un numéro de téléphone de confiance si oui, et déterminer que le premier numéro de téléphone n'est pas un numéro de téléphone de confiance si non, en déterminant si les contacts d'un second numéro de téléphone correspondant au premier terminal comprennent le premier numéro de téléphone ou déterminer si les contacts de tout contact du second numéro de téléphone comprennent le premier numéro de téléphone en fonction des informations de contact du premier numéro de téléphone et des informations de contact du premier terminal, déterminer que le premier numéro de téléphone est un numéro de téléphone de confiance si oui, et déterminer que le premier numéro de téléphone n'est pas un numéro de téléphone de confiance sinon.

2. Procédé selon la revendication précédente, dans lequel, après avoir alerté le premier terminal comme quoi le premier numéro de téléphone n'est pas un numéro de téléphone de confiance, le procédé comprenant en outre :
le fait de demander à un utilisateur du premier terminal s'il doit continuer à recharger le crédit associé au premier numéro de téléphone, et de recharger le crédit associé au premier numéro de téléphone lors de l'obtention d'une confirmation de la part de l'utilisateur.

3. Appareil permettant d'améliorer la sécurité lors de la recharge de crédit associé à un numéro de téléphone, l'appareil comprenant :
un module de réception (121), configuré pour recevoir une demande envoyée par un premier terminal pour recharger le crédit associé au premier numéro de téléphone ;
un module d'obtention (122), configuré pour obtenir des informations sur le premier numéro de téléphone et pour déterminer si le premier numéro de téléphone est un numéro de téléphone de confiance auquel un utilisateur du premier terminal fait confiance en fonction des informations obtenues ;
un module de commande (123) configuré pour recharger le crédit associé au premier numéro de téléphone s'il est déterminé que le premier numéro de téléphone est un numéro de téléphone de confiance et pour alerter le premier terminal comme quoi le premier numéro de téléphone n'est pas un numéro de téléphone de confiance s'il est déterminé que le premier numéro de téléphone n'est pas un numéro de téléphone de confiance,
le premier numéro de téléphone n'étant pas un numéro de téléphone correspondant au premier terminal,
le module d'obtention (122) comprenant :
un premier sous-module d'obtention (122a), configuré pour obtenir un registre d'historique des recharges du premier numéro de téléphone, le registre d'historique des recharges étant enregistré et stocké par l'appareil à chaque fois que le premier numéro est rechargé, afin que les multiples registres de recharge soient obtenus ;
un premier sous-module de détermination (122b), configuré pour déterminer si le premier numéro de téléphone a été rechargé par une pluralité d'utilisateurs différents et si le nombre de temps de recharge dépasse un nombre spécifié de fois à l'intérieur d'une plage spécifiée de temps, en fonction du registre d'historique des recharges du premier numéro de téléphone, déterminer que le premier numéro de téléphone n'est pas un numéro de téléphone de confiance si oui, et déterminer que le premier numéro de téléphone est un numéro de téléphone de confiance sinon ; ou
le module d'obtention (122) comprenant :
un second sous-module d'obtention (122c), configuré pour obtenir des informations de contact du premier numéro de téléphone et des informations de contact du premier terminal, l'appareil recueillant et stockant, à l'avance, des informations de contact rapportées par une pluralité de terminaux, de manière à obtenir les informations requises de contact lors de la réception de la demande de recharge ;
un second sous-module de détermination (122d), configuré pour déterminer s'il existe une association entre le premier numéro de téléphone et un numéro de téléphone correspondant au premier terminal en fonction des informations de contact du premier numéro de téléphone et des informations de contact du premier terminal, déterminer que le premier numéro de téléphone est un numéro de téléphone de confiance si oui, et déterminer que le premier numéro de téléphone n'est pas un numéro de téléphone de confiance sinon, en déterminant si les contacts d'un second numéro de téléphone correspondant au premier terminal comprennent le premier numéro de téléphone ou en déterminant si les contacts de tout contact du second numéro de téléphone comprennent le premier numéro de téléphone en fonction des informations de contact du premier numéro de téléphone et des informations de contact du premier terminal, déterminer que le premier numéro de téléphone est un numéro de téléphone de confiance si oui, et déterminer que le premier numéro de téléphone n'est pas un numéro de téléphone de confiance sinon.

4. Appareil selon la revendication 3, dans lequel le module de commande (123) est en outre configuré pour :
après avoir alerté le premier terminal comme quoi le premier numéro de téléphone n'est pas un numéro de téléphone de confiance, demander à un utilisateur du premier terminal s'il doit continuer à recharger le crédit associé au premier numéro de téléphone, et recharger le crédit associé au premier numéro de téléphone à la réception d'une confirmation de la part de l'utilisateur.

5. Programme informatique comprenant des instructions qui, quand elles sont exécutées sur un dispositif informatique, l'amènent à mener à bien le procédé de l'une ou l'autre des revendications 1 ou 2.
